# EUROPEAN PATENT APPLICATION

(11) **EP 2 043 240 A2**
(43) Date of publication of application: **01.04.2009**
(21) Application number: 08253155.9
(22) Date of filing: 26.09.2008
(51) Int. Cl.: H02M 1/12

(54) **Switching mode power supplies with digital electromagnetic interference control**

(30) Priority: 29.09.2007 US 976420 P; 17.01.2008 US 9209
(71) Applicant: Astec International Limited, Kowloon (HK)
(72) Inventor: Currie, Gordon, Kwun Tong, Kowloon (HK)
(74) Representative: Hale, Peter

(57) **Abstract**

A method of programming a switching mode power supply before or after the power supply is installed in a system to control electromagnetic interference. The switching mode power supply includes at least one switching device and a digital controller. The digital controller adjusts a switching frequency of the at least one switching device based on one or more programmable parameters. The method includes programming the digital controller with the one or more programmable parameters via a user interface. The programmable parameter(s) define a switching frequency adjustment to control electromagnetic interference.

## Description

### CROSS-REFERENCE TO RELATED APPLICATION

This application claims the benefit of U.S. Provisional Application No. 60/976,420 filed September 29, 2007, the entire disclosure of which is incorporated herein by reference.

### FIELD

The present disclosure relates to switching mode power supplies and controlling electromagnetic interference (EMI) produced by switching mode power supplies.

### BACKGROUND

The statements in this section merely provide background information related to the present disclosure and may not constitute prior art.

Switching mode power supplies commonly include one or more switching devices. The switching devices are typically controlled by pulse width modulated signals having fast rise and fall times. In use, the switching devices produce electromagnetic interference (EMI). The EMI can be reduced by using specific discrete circuit elements such as resistors, inductors, and capacitors to adjust switching frequencies of the switching devices. These discrete components are selected and designed for specific applications of the power supplies. Discrete filter elements, component placement, and shielding have also been used to reduce EMI in switching mode power supplies.

### SUMMARY

According to one aspect of the present disclosure, a switching mode power supply for providing a current to a load includes an input to receive an input voltage, at least one switching device coupled to the input, a digital controller to adjust a switching frequency of the at least one switching device based on one or more programmable parameters to control electromagnetic interference, and a programming interface to provide the at least one programmable parameter to the digital controller.

According to another aspect of the present disclosure, a method is disclosed for programming a switching mode power supply installed in a system to control electromagnetic interference. The switching mode power supply includes at least one switching device and a digital controller for adjusting a switching frequency of the at least one switching device based on at least one programmable parameter. The method includes programming the digital controller with at least one programmable parameter via a user interface. The at least one programmable parameter defines the switching frequency adjustment such that electromagnetic interference from the system is controlled.

According to yet another aspect of the present disclosure, a switching mode power supply for providing a direct current to a load includes an input to receive an input voltage, a rectifier coupled to the input to rectify the input voltage, a switching converter coupled to the rectifier circuit and including at least two switching devices, a digital controller to adjust switching frequencies of the at least two switching devices based on at least one programmable parameter to control electromagnetic interference, and a programming interface to receive the at least one programmable parameter.

According to still another aspect of the present disclosure, a computing device for programming a digital controller of a switching mode power supply to control electromagnetic interference includes a user interface for receiving user input defining a switching frequency adjustment, and a processor for programming the digital controller with at least one programmable parameter in response to the user input. The at least one programmable parameter defines a switching frequency adjustment for one or more switching devices in the switching mode power supply.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.

Figure 1 is a flow diagram of a method of programming a switching mode power supply according to one embodiment of the present disclosure.

Figure 2 is a graphical spectrum analysis illustrating a linear frequency adjustment of a fundamental switching frequency.

Figure 3 is a graphical spectrum analysis illustrating a random frequency adjustment of a fundamental switching frequency.

Figure 4 is a waveform diagram illustrating a reference clock signal, a PWM signal having a fundamental frequency, and PWM signals having linear, non-linear, and random frequency variations relative to the fundamental frequency.

Figure 5 is a block diagram of a switching mode power supply coupled to a computing device hosting a user interface.

Figure 6 is a screen shot of a graphical user interface for programming one or more switching mode power supplies.

Figure 7 is a block diagram illustrating multiple switching mode power supplies programmed by a server hosting a user interface via a communication adapter.

Figure 8 is a block diagram of a switching mode power supply according to one embodiment of the present disclosure.

Figure 9 is a circuit diagram of a single stage switching mode power supply according to another embodiment of the present disclosure.

Figure 10 is a circuit diagram of a multiple stage switching mode power supply according to anther embodiment of the present disclosure.

### DETAILED DESCRIPTION

The following description is merely exemplary in nature and is not intended to limit the present disclosure, application, or uses.

According to one aspect of the present disclosure, a method is provided for programming a switching mode power supply installed in a system to control electromagnetic interference from the system. The switching mode power supply includes at least one switching device and a digital controller such as, for example, a microprocessor, microcontroller, digital signal processor, etc. The digital controller switches the at least one switching device between ON and OFF states at a switching frequency to provide current to a load. The switching frequency of the at least one switching device is adjusted by the digital controller based on at least one programmable parameter.

The method includes programming the digital controller with at least one programmable parameter via a user interface. In this manner, a user can program the digital controller with the at least one programmable parameter to define the adjustment (i.e., dither, oscillation, jitter, wobble, etc.) to the switching frequency over time. By adjusting the switching frequency of the at least one switching device over time, the digital controller spreads electromagnetic inference (EMI) across a range of frequencies to minimize peaks in the EMI at specific frequencies. As a result, the system can meet or surpass certain application-specific EMI requirements.

The one or more programmable parameters may include a parameter indicating a type of switching frequency adjustment to be employed. For example, in some embodiments, the digital controller of a switching mode power supply can be programmed to adjust the switching frequency in a linear, non-linear, random or other manner, or to not adjust the switching frequency. In other embodiments, less than all of these options for adjusting the switching frequency can be employed.

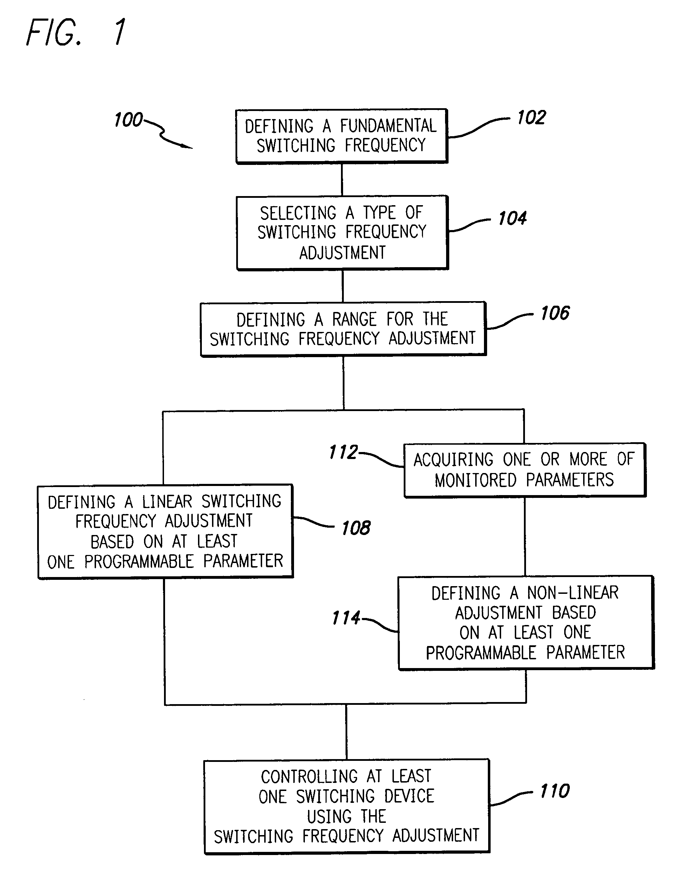

A method of programming a digital controller of a switching mode power supply according to one specific embodiment of the present disclosure is illustrated in Fig. 1 and indicated generally by reference numeral 100. The method 100 includes defining a fundamental switching frequency at 102. The fundamental switching frequency can be defined according to a voltage and/or current requirement of the switching mode power supply or other considerations, such as available space, efficiency, cost, etc. The fundamental switching frequency is a default switching frequency for the at least one switching device.

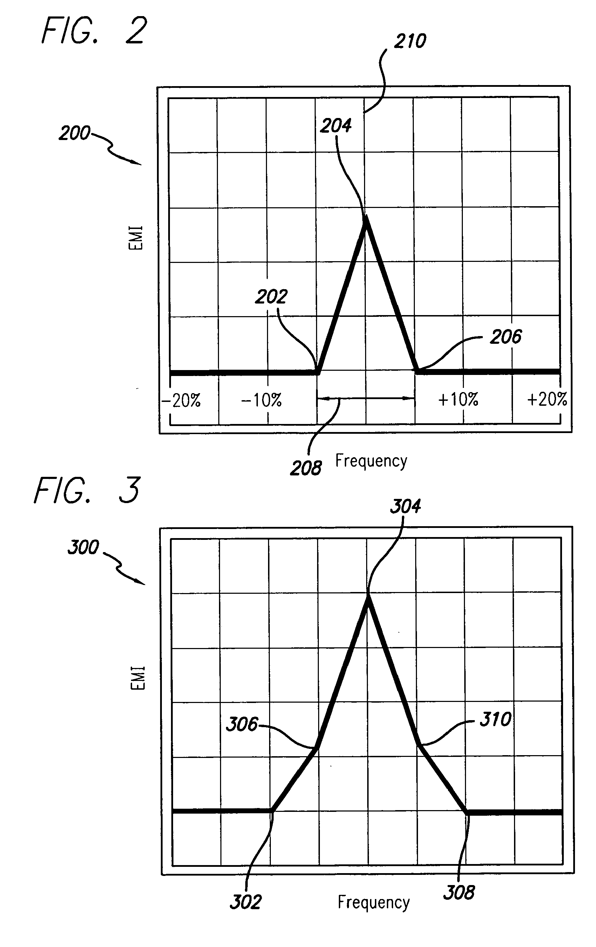

The method 100 also includes indicating at 104 a type of switching frequency adjustment to the fundamental switching frequency. The type of switching frequency adjustment may be, for example, linear, non-linear, random, etc. One example of a linear switching frequency adjustment is illustrated in Figure 2. The switching frequency increases linearly from a minimum frequency 202 to a maximum frequency 204. Then, the switching frequency linearly decreases from the maximum frequency 204 to a minimum frequency 206. The increase and decrease in switching frequency is repeated over time to spread the EMI produced by the switching mode power supply (and thus the system hosting the switching mode power supply) over the frequency spectrum between the maximum frequency 204 and minimum frequency 202/206. The programmable parameter(s) define the slope of the linear increase and decrease, which may be greater or less than what is shown for illustrative purposes in Fig. 2.

One example of a non-linear switching frequency adjustment is illustrated in Fig. 3. As shown therein, a switching frequency increases over time from a minimum frequency 302 to a maximum frequency 304. The increase, however, is non-linear because the slope of the increase changes at 306. After increasing to a maximum frequency 304, the frequency proceeds to decrease from the maximum frequency 304 over time to a minimum frequency 308. The decrease is also non-linear because the slope of the decrease changes at 310. This increase and decrease in switching frequency is repeated over time. The programmable parameter(s) define the increase and decrease rates of the switching frequency over the time period illustrated.

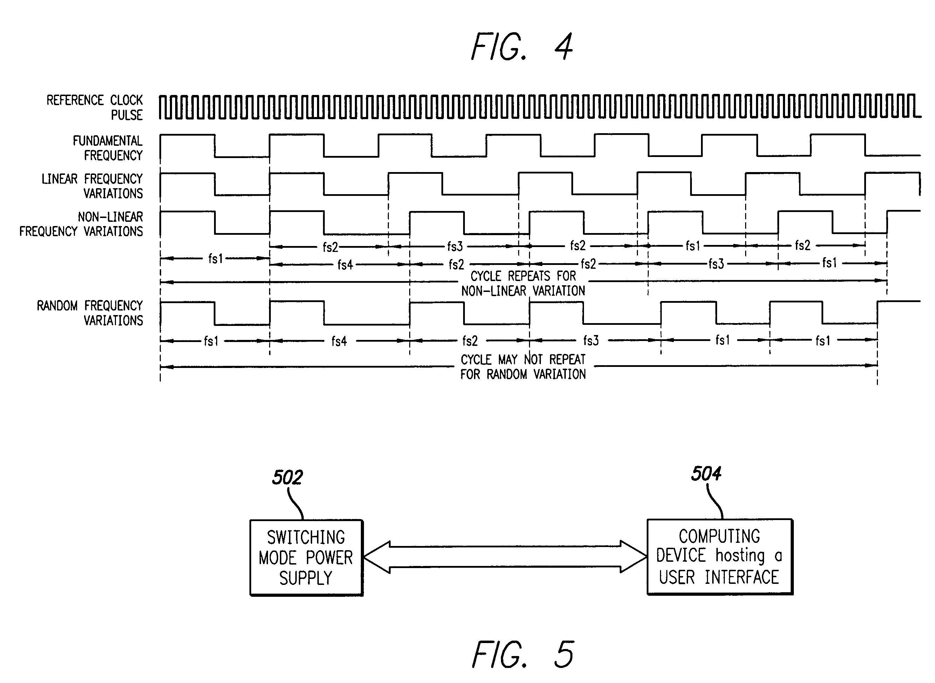

Fig. 4 illustrates several PWM waveforms that can be provided by a digital controller to a switching device, including a PWM signal having a fundamental switching frequency fs1, a PWM signal having linear frequency adjustments, a PWM signal having non-linear frequency adjustments, and a PWM signal having random frequency adjustments. As shown in Fig. 4, the frequency of the PWM signal with linear variations increases from frequency fs1 to fs2 to fs3 during the first three cycles, decreases from fs3 to fs2 to fs1 during the following two cycles, and then repeats. The frequency of the PWM signal with non-linear variations changes from fs1 to fs4 to fs2 during the first three cycles, remains at fs2 for an additional cycle, and then changes from fs2 to fs3 to fs1 during the following two cycles. The frequency of the PWM signal with random variations changes from fs1 to fs4 to fs2 to fs3 to fs1 during the first five cycles and then remains at fs1 for an additional cycle. The frequency of the PWM signal during subsequent cycles will not be reliably the same as the prior cycles. It should be understood that the waveforms illustrated in Fig. 4 are provided for illustrative purposes, and that a variety of other PWM signals with linear, non-linear (e.g., sinusoidal) and/or random frequency adjustments may be employed in any given implementation of these teachings.

A non-linear or a random adjustment of the switching frequency can be dependent on one or more characteristics of a switching mode power supply and/or a system in which the power supply is installed (e.g., a computer server). Such characteristics may include, for example, an operating input voltage, an operating input current, an internal temperature, etc.

Referring again to Fig. 1, the method 100 also includes defining a maximum frequency change at 106. The maximum frequency change defines outer boundaries of the switching frequency adjustment. As illustrated in Fig. 2, the maximum frequency change 208 is the difference between the minimum frequency 202/206 and the maximum frequency 204. It should be understood that a maximum frequency change can be proportioned above and below a fundamental frequency in any desired manner as long as the fundamental frequency exists between the maximum frequency and the minimum frequency.

After the maximum frequency change is defined, method 100 branches depending on which type of switching frequency adjustment was selected at 104. If a linear switching frequency adjustment was selected, method 100 proceeds to 108 to define a linear switching frequency adjustment based on at least one programmable parameter. Alternatively, if a non-linear switching frequency adjustment or a random switching frequency adjustment was selected at 104, the method 100 proceeds to 112 for acquiring one or more of the monitored parameters to determine adjustment of the switching frequency. As stated above, the non-linear switching frequency adjustment can be based on one or more of an operating input voltage, an operating input current, an internal temperature, a fan speed, a bulk voltage level, an operating enclosure, shielding, a system construction, etc. If a non-linear frequency adjustment was selected, the method 100 continues at 114 for defining an adjustment based on at least one programmable parameter and one or more switching mode power supply characteristics. If a random frequency adjustment was selected, the method 100 continues at 114 for defining a random adjustment based on at least one programmable parameter and one or more monitored parameters. To generate random frequency changes, the digital controller acquires one or more the monitored parameters. Considering one or more of the acquired monitored parameters, the digital controller multiplies, divides, and/or adds these monitored parameters such that the product, sum, or quotient can be broken down in different coefficients to determine frequency variations.

The exemplary method 100 of Fig. 1 concludes at 110 by controlling the at least one switching device using the defined linear, non-linear, or random frequency adjustment. It should be understood that flow diagram of Fig. 1 is provided for illustative purposes, and that the specific operations, number of operations and order of operations may vary in any given implementation of these teachings. Further, various operations may be performed manually or automatically (i.e., via computer), and by one or more users or computing devices.

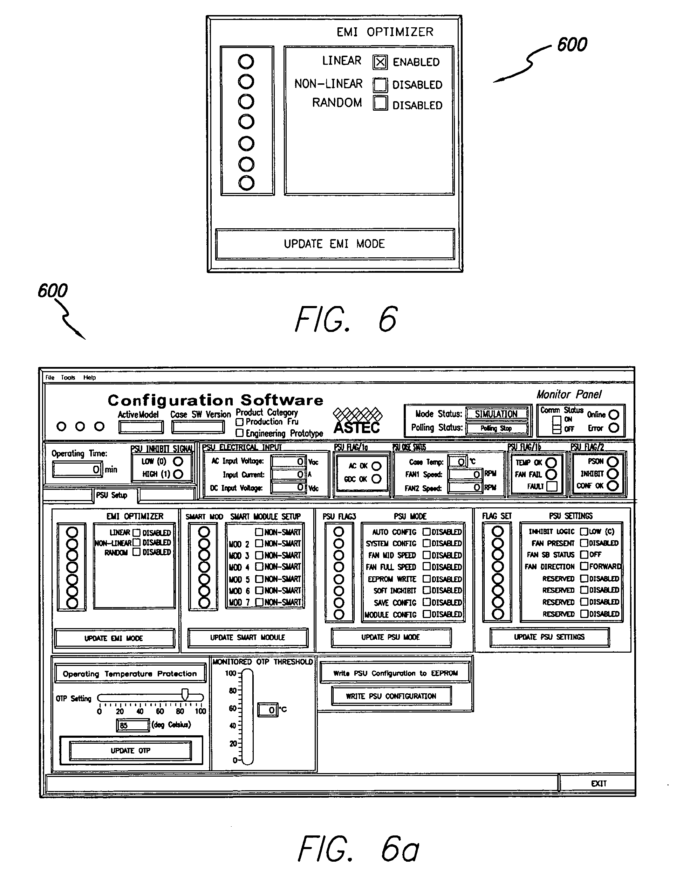

As illustrated in an exemplary implementation of Fig. 5, programming the at least one programmable parameter may include coupling a computing device to a switching mode power supply. The computing device hosts a user interface used to program the switching mode power supply. The user interface allows a user to complete one or more of the processes described above with reference to method 100. In one implementation, the user interface is a graphical user interface, such as illustrated in Fig. 6. From the example graphical user interface 600, a user can select to adjust a switching frequency of a switching mode power supply either linearly, non-linearly, or randomly over time. While the EMI control illustrated in Figure 6 is limited to selecting a type of switching frequency adjustment, a user may have additional control of a switching frequency adjustment via a user interface in other implementations. For example, a user may be able to select particular aspects of the adjustment. Specifically, a user may select a rate of switching frequency adjustment, select a maximum switching frequency change, include two or more rates in a switching frequency adjustment (e.g. Figure 3), etc.

As shown in Figure 6a, a graphical user interface can also includes additional programmable controls and monitoring of a switch mode power supply. The additional controls may program a digital controller with regard to operating condition other than EMI. The additional controls can affect control of one or more switches or other components of a switch mode power supply. While the graphical user interface of Figure 6 and 6a include button-type control, it should be appreciated that other graphical user interfaces can be employed in other embodiments. For example, a user may adjust a switching frequency in a graphical interface emulating a spectrum analysis of a switch mode power supply. It should be also be understood that a wide variety of other user interfaces may be employed including, for example, a keyboard, mouse, touch-screen, dipswitches, etc. to define the one or more programmable parameters. Further, the computing device may be a personal computer, a workstation computer, a computer server, a handheld computing device or any other suitable computing device capable of hosting the user interface.

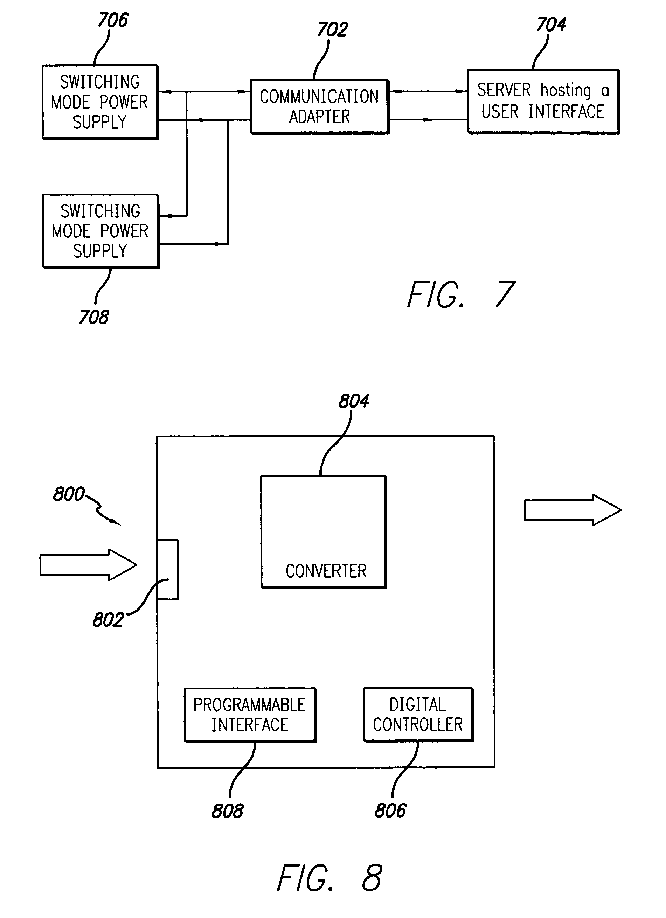

In some embodiments, a communication adapter is employed to program a switching mode power supply. The communication adapter is coupled between a computing device (such as a computer server) and one or more switching mode power supplies. As illustrated in Figure 7, a communication adapter 702 couples a server 704 hosting a user interface to a first switching mode power supply 706 and a second switching mode power supply 708. As such, the communication adapter allows multiple switching mode power supplies to be programmed in parallel, saving time and resources during one or more manufacturing or configuration processes. The communication adapter may communicate with the server and/or the multiple switching mode power supplies using serial communication, for example, I²C serial communication.

Programming a switching mode power supply may include measuring EMI radiating from a system hosting the power supply while in operation. By measuring EMI radiating from the system in a controlled environment (e.g. a shielded EMI chamber), a user can select a type of switching frequency adjustment most suited to the particular system in which the switching mode power supply is installed. As such, programming a switching mode power supply may include programming a linear frequency adjustment, then subsequently reprogramming the same switching mode power supply with a non-linear switching frequency adjustment. The programmable nature of the power supply essentially provides real time optimization of EMI from a system. The type of switching frequency adjustment employed can be based on one or more EMI requirements of a system in which the switching mode power supply is installed, e.g., an FCC class requirement. Alternatively, the EMI performance of a programmable power supply can be optimized with the power supply standing alone, and before the power supply is installed in a system.

Fig. 8 illustrates a programmable single stage power supply 800 according to another embodiment of the present disclosure. The power supply 800 includes an input 802 to receive an input voltage and a converter 804 including at least one switching device. The switching mode power supply 800 also includes a digital controller 806 to adjust a switching frequency of the at least one switching device based on at least one programmable parameter to control electromagnetic interference. The switching mode power supply 800 further includes a programmable interface 808 to provide the at least one programmable parameter to the digital controller 806.

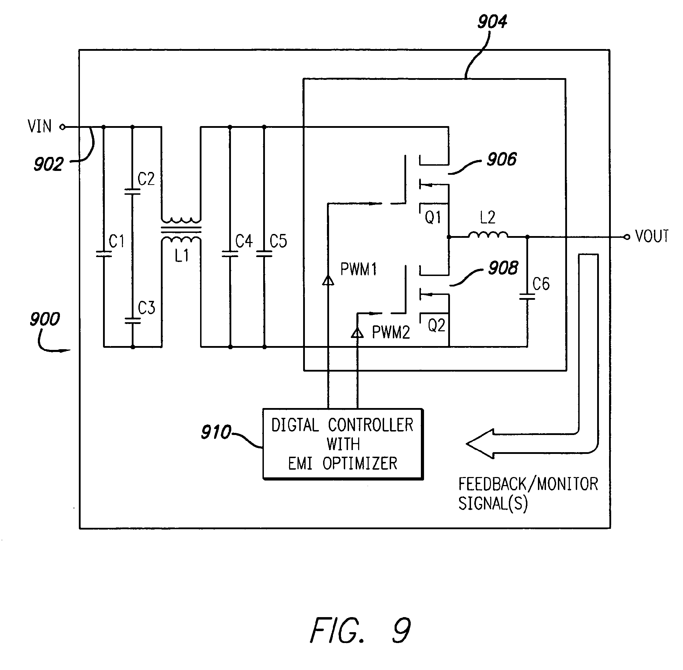

Fig. 9 illustrates a programmable multi-stage power supply 900 according to another embodiment of the present disclosure. The switching mode power supply 900 includes an input 902 to receive an input voltage and a switching converter 904 including a first switching device 906 and a second switching device 908. The switching mode power supply 900 also include a digital controller 910 to adjust a switching frequency of each of the first switching device and the second switching device based on at least one programmable parameter to control electromagnetic interference.

As shown, the first switching device and the second switching device are field effect transistors, more particularly MOSFETs. The digital controller provides pulse width modulated (PWM) signals to the control terminals of the first and second switching devices 906, 908. The PWM signals define the switching frequencies. To adjust the switching frequencies, the system controller 910 alters the PWM control signals. As described above, the PWM signals can be adjusted linearly, non-linearly, or randomly to control EMI from the power supply or a system hosting the power supply. It should be understood by those skilled in the art that other switching devices can be used in a different embodiment of a switching mode power supply such as a different type of transistor, e.g. bipolar junction transistor, field effect transistor, etc. The switching control signal can also be fixed on time or variable by frequency.

Switching mode power supply 900 also includes a feedback signal representing an output of the switching mode power supply. The feedback signal provides an additional variable in the adjustment of the switching frequencies of the first and second switching devices 906, 908. In addition to the output of the switching mode power supply, other signals can also be monitored. For example, an input voltage and an input current can be monitored such that a digital controller adjusts at least one switching frequency based on the input voltage and/or the input current.

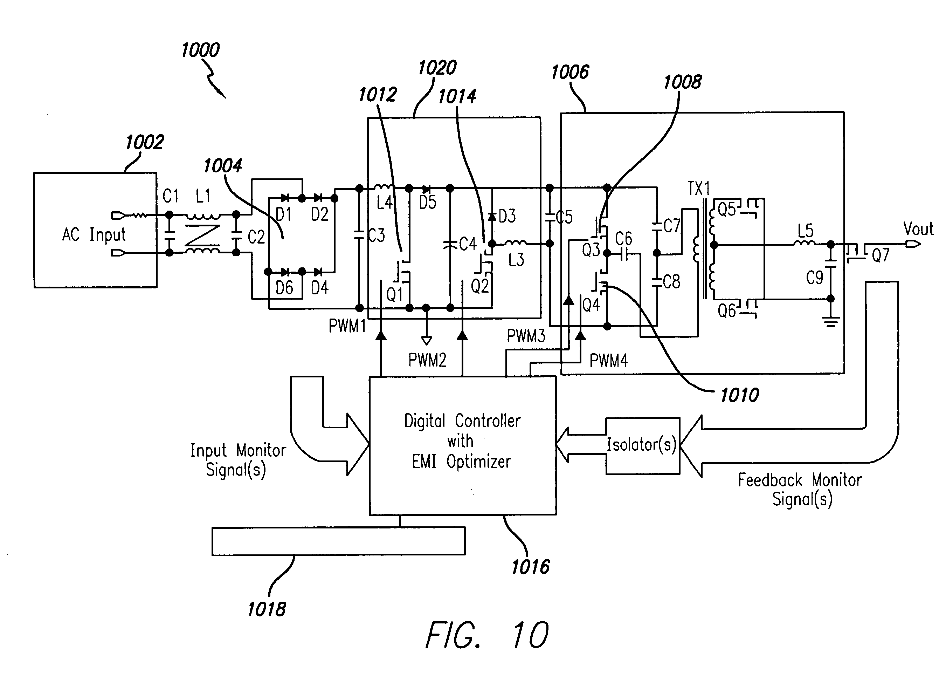

Fig. 10 illustrates a switching mode power supply 1000 according to another embodiment. The power supply 1000 includes an input 1002 to receive an input voltage and a full bridge rectifier 1004 coupled to the input 1002 to rectify the input voltage. A different type of rectifier can be included in other embodiments of the present disclosure. The switching mode power supply also includes a switching converter 1006 coupled to the rectifier. The switching converter includes switching devices 1008 and 1010 in one stage, and switching devices 1012, 1014 in another stage. The power supply 1000 also includes a digital controller 1016 and a programmable interface 1018, as shown in Fig. 10. The system controller 1016 adjusts the switching frequency of switches 1008, 1010, 1012 and 1014 based on at least one programmable parameter to inhibit EMI from a system. The programmable interface 1018 provides the at least one programmable parameter to the digital controller 1016.

The digital controller 1016 monitors a feedback signal representing an output of the switching mode power supply. Also, the system controller monitors a voltage and a current associated with the input voltage. The digital controller can also monitor an internal temperature of the switching mode power supply or a temperature of a system in which the switching mode power supply is installed.

Based on the monitored characteristics above, the digital controller can define the adjustment of one or more switching frequencies of switching devices 1008, 1010, 1012 and 1014. Each switching frequency is based on at least programmable parameter and, optionally, one or more of the monitored characteristics described above. For example, a system can include several internal components in addition to the switching mode power supply. Based on a current usage of the other components, a current demand from the switching mode power supply can increase and decrease. By monitoring one of the input current and the output current, the switching mode power supply can dither a switching frequency of one or more of the switching devices 1008, 1010, 1012, and 1014 during higher current demand situations. In lower current demand, the one or more switching devices can be switched at the fundamental frequency (i.e., without switching frequency adjustment). In other words, a programmable parameter can define one or more threshold switching mode power supply characteristics at which a digital controller will include a dither or wobble in a switching frequency of one or more switching devices. Each of the switching frequencies can be independent or dependent on the switching frequency of one or more other switching devices.

It should be understood that the teachings of the present disclosure can be applied to AC/DC and DC/DC converter employing switching devices that produce EMI.

The description herein is merely exemplary in nature and, thus, variations that do not depart from the gist of that which is described are intended to be within the scope of the teachings. Such variations are not to be regarded as a departure from the spirit and scope of the teachings.

## Claims

1. A switching mode power supply for providing a current to a load, the power supply comprising:
an input to receive an input voltage;
at least one switching device coupled to the input;
a digital controller to adjust a switching frequency of the at least one switching device based on one or more programmable parameters to control electromagnetic interference; and
a programming interface to provide the at least one programmable parameter to the digital controller.

2. The switching mode power supply of claim 1 wherein the one or more programmable parameters define a linear adjustment to the switching frequency; or
wherein the one or more programmable parameters define a random adjustment of the switching frequency.

3. The switching mode power supply of claim 1 wherein the one or more programmable parameters define a non-linear adjustment of the switching frequency.

4. The switching mode power supply of claim 3 wherein the digital controller is configured to non-linearly adjust the switching the switching frequency of the at least one switching device based on the one or more programmable parameters and on one or more of an operating input voltage, an operating input current, and temperature.

5. The switching mode power supply of claim 1 further comprising a switching converter, the switching converter including said at least one switching device; or
wherein the digital controller is configured to adjust the switching frequency of the at least one switching device based on the one or more programmable parameters and a feedback signal of the switching mode power supply.

6. The switching mode power supply of claim 1 wherein the at least one switching device includes at least two switching devices.

7. A method of programming a switching mode power supply installed in a system to control electromagnetic interference, the switching mode power supply including at least one switching device and a digital controller to adjust a switching frequency of the at least one switching device based on at least one programmable parameter, the method comprising programming the digital controller with at least one programmable parameter via a user interface, the at least one programmable parameter defining a switching frequency adjustment such that electromagnetic interference from the system is controlled.

8. The method of claim 7 wherein the programming the digital controller includes selecting a linear switching frequency adjustment; or
wherein the at least one programmable parameter defines a switching frequency adjustment based on one or more operating conditions of the switching mode power supply.

9. The method of claim 7 wherein programming the digital controller includes selecting a non-linear switching frequency adjustment.

10. The method of claim 9 wherein the at least one programmable parameter defines a non-linear switching frequency adjustment based on one or more of an input voltage, an input current, an internal temperature, a fan speed, and a bulk voltage level in the system.

11. The method of claim 7 further comprising coupling a programming interface of the switching mode power supply to a computing device hosting the user interface; or
wherein the user interface is a graphical user interface; or
wherein the method further comprises coupling a programming interface of the switching mode power supply to a computing device hosting the user interface via a communication adapter, the communication adapter configured to communicate with multiple switching mode power supplies coupled to the computer device.

12. The method of claim 7 further comprising defining a fundamental switching frequency for the at least one switching device; or wherein
the method further comprises defining a range for the switching frequency adjustment; or wherein
the method further comprises measuring an electromagnetic interference associated with the system.

13. A switching mode power supply for providing a direct current to a load, the power supply comprising:
an input to receive an input voltage;
a rectifier coupled to the input to rectify the input voltage;
a switching converter coupled to the rectifier circuit and including at least two switching devices;
a digital controller to adjust switching frequencies of the at least two switching devices based on at least one programmable parameter to control electromagnetic interference; and
a programming interface to receive the at least one programmable parameter.

14. The switching mode power supply of claim 13 wherein the digital controller is configured to adjust the switching frequencies of the at least two switching devices based on said at least one programmable parameter and a feedback signal of the switching mode power supply; or wherein
the switching mode power supply further comprises a regulator coupled between the rectifier and the switching converter, the regulator including at least one regulator switching device, the digital controller configured to adjust the switching frequency of the regulator switching device to control electromagnetic interference.

15. A computing device for programming a digital controller of a switching mode power supply to control electromagnetic interference, the computing device comprising a user interface for receiving user input defining a switching frequency adjustment, and a processor for programming the digital controller with at least one programmable parameter in response to the user input, the at least one programmable parameter defining a switching frequency adjustment for one or more switching devices in the switching mode power supply.
